# EUROPEAN PATENT SPECIFICATION

(11) **EP 3 628 482 B1**
(45) Date of publication and mention of the grant of the patent: **29.06.2022**
(21) Application number: 19199861.6
(22) Date of filing: 26.09.2019
(51) Int. Cl.: B32B 5/02, B32B 5/08, B32B 5/18, B32B 5/24, B32B 7/12, B32B 19/04, B32B 37/00, E04B 1/74

(54) **BACKING LAYER FOR INSULATING CONSTRUCTION PANELS AND MANUFACTURING METHOD THEREOF**
TRÄGERSCHICHT FÜR ISOLIERENDE BAUPLATTEN UND HERSTELLUNGSVERFAHREN DAFÜR
COUCHE DE SUPPORT POUR ISOLER DES PANNEAUX DE CONSTRUCTION ET SON PROCÉDÉ DE FABRICATION

(30) Priority: 27.09.2018 IT 201800008955
(43) Date of publication of application: 01.04.2020
(73) Proprietor: Silcart S.p.A., 31030 Carbonera, Frazione Mignagola TV (IT)
(72) Inventor: FAOTTO, Ugo, 31030 Carbonera, Treviso (IT)
(74) Representative: Pennacchio, Salvatore Giovanni

(56) References cited:
- EP-A1- 3 045 306
- EP-A1- 3 106 580
- WO-A1-2016/120749

## Description

### BACKGROUND ART OF THE INVENTION

### Field of application

The present invention relates to a backing layer for a multilayer insulating construction panel. In particular, the invention relates to a backing layer of an insulating panel of the type comprising a main thermally insulating layer consisting of an expanded insulation having a cellular structure.

### Prior art

From an energy saving viewpoint, the need is increasingly felt in the construction field to thermally insulate buildings in order to promote good heat diffusion in rooms and simultaneously avoid the dispersion thereof outside. Multilayer insulating panels are widely used in constructions for this purpose, for example to ensure the thermal insulation of walls, floors and roofs. Such insulating panels generally comprise an insulating layer, e.g. manufactured of expanded polyurethane, interposed between two respective backing layers adapted to cover the insulating layer. Such backing layers serve a dual purpose: on the one hand, they contain the polyurethane foam expansion and on the other, they give the panels themselves a predetermined shape and thickness while simultaneously ensuring the dimensional stability and mechanical resistance of the panels, for example to bending, impacts, abrasion.

Rigid expanded polyurethane has had significant success recently for such applications because, having a average thermal conductivity coefficient λ [W m⁻¹ K⁻¹] lower with respect to other commercial insulating materials, it allows a good thermal insulation to be obtained by using less thick panels. Therefore, the insulating construction panels using the expanded polyurethane have smaller volumes and weights with respect to the insulating panels made with other insulations, insulation effects being equal.

As is known, the reduced thermal conductivity of the expanded polyurethane and of the similar expanded synthetic products (polystyrene, styrene) is due to the cellular structure thereof: it is foam in which about 3 to 5% by weight consists of the polymer and the remaining 97% to 95% of a gas phase of expanding agents incorporated in closed cells. The small quantity of polymer and the gas phase limit the thermal conduction, while the contained dimension of the closed cells limits the thermal convection between the gas and the inner surface of such cells.

The phenomenon which most affects the performance of these cellular structures is the partial spread of the gas phase outside the panel. Such a spread is to be minimized as much as possible in order to substantially keep the insulating properties of the panel unchanged over time.

Insulating construction panels are known in which the spreading phenomenon of the gas phase is limited by applying a coating which is impermeable to the spreading of oxygen, to both sides of the panel, that is a gas-impermeable (gas-tight) coating according to Standard ASTM F2622-08/ASTM D3985.

According to such a Standard ASTM F2622-08/ASTM D3985, a panel coating is considered substantially gas-impermeable or gas-tight when it ensures an oxygen transmission rate (OTR) of less than 4.5 ml/m² for 24 hours.

For example, the insulating panels containing polyurethanes (PUR) or polyisocyanurates (PIR) with gas-tight coating currently on the market are made using a metal coating applied, as is, to the opposite faces of the panel, or in multilayer coatings in which metal layers or layers of special plastic polymers serving the function of gas barrier are coupled to other insulating layers to form multilayer backings. Such multilayer backings consist for example of: metal-polymer, metal-paper, metal-polymer-paper or polymer fibrous layer.

The main disadvantage of the panels using backing layers including aluminum is associated with the cost required to manufacture aluminum layers which significantly affects the overall cost of the panel.

Moreover, the multilayer backings require several production runs to laminate or couple various layers to one another.

The metal layer also requires a surface coating by means of a polymer or a surface lacquering or painting phase (for example, with epoxy or nitro powder), in order to be compatible with the polyurethane foam.

Moreover, plastic films often require a Corona treatment in order to be compatible with the polyurethane foam.

Another drawback of the known solutions is that for the lamination of the various layers, the multilayer backings use adhesive layers which may cause the formation of bubbles and folds.

The presence of such bubbles and folds nullifies the gas-barrier effect of the backing and may cause the delamination of the layers during the production of the insulating panels.

EP 3 045 306 A1 discloses a covering for an insulation made of PUR- or PIR-foam, wherein the covering comprises in order a co-extruded oxygen-tight layer (1), a carrier layer (2) and a mineral coating layer.

### SUMMARY OF THE INVENTION

It is therefore the object of the present invention to provide a backing layer for a thermal-insulating panel and a multilayer thermal-insulating construction panel having such features as to obviate the drawbacks described with reference to backings for panels of the known art.

In particular, the present invention relates to a backing layer according to claim 1.

It is a particular object of the invention to provide a backing layer for a thermal-insulating panel having such features as to reconcile the needs of:
- flexibility and windability of the backing layer prior to the application thereof to the insulating panel,
- mechanical resistance,
- dimensional stability,
- suitability for industrially manufacturing the insulating panel made of an expanded/extruded synthetic material, in particular expanded polyurethane, which is manufactured so as to have good thermal insulating properties and to maintain the gas-spreading impermeability properties over time.

These and other objects are achieved by means of a backing layer for an insulating construction panel according to claim 1, and also by means of an insulating construction panel according to claims 11, 12 and by means of the method for manufacturing a backing layer for an insulating construction panel according to claim 13.

Preferred and advantageous embodiments are the object of the dependent claims.

### BRIEF DESCRIPTION OF THE DRAWINGS

Further features and advantages of the backing layer of an insulating panel according to the invention will become apparent from the following description of preferred embodiments thereof, given only by way of a non-limiting, indicative example, with reference to the accompanying drawings, in which:
- **figure 1** shows an exploded diagrammatic view of a cross section of a multilayer insulating construction panel comprising backing layers of the invention in a first embodiment in which the two outer backing layers are depicted detached from (or not yet joined with) an inner insulating layer made of an expanded synthetic material;
- **figure 2** diagrammatically shows a second embodiment of the insulating panel backing layer of the invention;
- **figure 3** diagrammatically shows a third embodiment of the insulating panel backing layer of the invention.

In the aforesaid figures, equal or similar elements are indicated with the same numerals.

### DETAILED DESCRIPTION

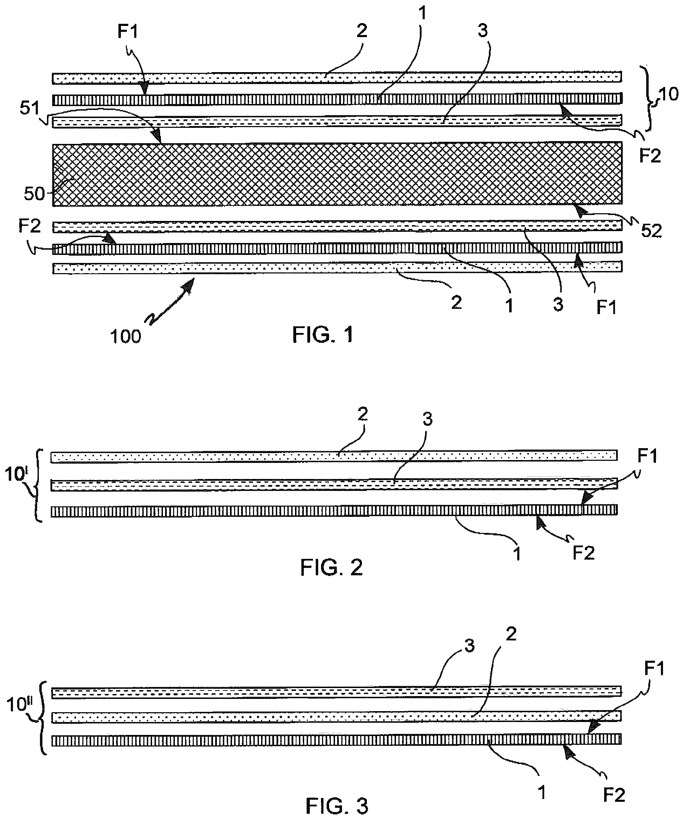

With reference to figure 1, a multilayer construction panel with thermal and/or acoustic insulating properties is indicated as a whole with numeral 100.

The insulating panel 100 advantageously can be used in the construction field for coating and/or thermally and/or acoustically insulating walls, floors and roofs.

Such an insulating panel 100 comprises a main layer 50 made of an insulating material, having a first surface 51 and a second surface 52 which are opposite to each other (the largest surfaces are meant here and not the contour surfaces showing the stratification of panel 100) .

In particular, the main layer 50 of the thermal-insulating panel consists of an expanded insulation having a cellular structure, such as e.g. expanded polyurethane (PUR) or expanded polyisocyanurate (PIR), phenolic foam or polystyrene (PS). In a preferred embodiment, the backing layer 10, 10', 10" of the invention is particularly suitable in the case of thermal-insulating panels which main layer 50 consists of expanded polyurethane (PU).

The insulating panel 100 further comprises at least one backing layer 10, 10', 10" connected to the main layer 50 along at least one or both of the first 51 and second 52 surfaces. In other words, the main layer 50 of the panel is coated on at least one side by means of the backing layer 10, 10', 10" or is interposed between two backing layers 10, 10', 10''.

Such backing layers 10, 10', 10" are configured to contain the expansion of the polyurethane (or polyisocyanurate) foam during the manufacturing steps of the panels 100. Moreover, the backing layers 10, 10', 10" are adapted to give the panels 100 a predetermined shape and thickness, simultaneously ensuring dimensional stability of the panels themselves.

In the embodiment shown in figure 1, the central body 50 of panel 100 is interposed or sandwiched between two similar backing layers 10 of the invention.

In general, the backing layer 10, 10', 10" of the invention comprises a reinforcement layer 1 made of fibrous material, a first coating layer 2 of the reinforcement layer of the mineral type and a second coating layer 3 of the reinforcement layer having gas-impermeability (gas-tight) properties. In particular, such a second coating layer 3 is configured to avoid the gas phase of the main layer 50 from spreading outside panel 100.

The second gas-impermeable coating layer 3 is made by applying at least one water dispersed polymer to the reinforcement layer 1 or to the first coating layer 2 of the mineral type, and subsequent drying, in particular at a high temperature.

In other words, in the embodiment shown in figure 1, the central body 50 of panel 100 is sandwiched between the two backing layers 10 of the invention, both having gas-impermeability (gas-tight) properties in order to seal the panel. In a different example, the central body 50 of panel 100 is sandwiched between a gas-tight backing layer 10 and another (always gas-tight) metal layer or multilayer comprising a plurality of alternating polymer layers.

With reference to figure 1, in a first example embodiment of backing 10, the fibrous reinforcement layer 1 comprises a first surface F1 and an opposite second surface F2 and is interposed or sandwiched between the above-mentioned first 2 and second 3 coating layer. In particular, the first mineral coating layer 2 is applied to the first surface F1 of the fibrous reinforcement layer 1 and the second coating layer 3, having gas-impermeability properties, is applied to the second surface F2 of the fibrous reinforcement layer 1.

With reference to figure 2, in a second example embodiment of backing 10' of the invention, the second coating layer 3 having gas-impermeability properties is applied to the first surface F1 of the fibrous reinforcement layer 1 and the first mineral coating layer 2 is applied to the aforesaid second gas-impermeable coating layer 3.

With reference to figure 3, in a third example embodiment of backing 10" of the invention, the first mineral coating layer 2 is applied to the first face F1 of the fibrous reinforcement layer 1 and the second gas-impermeable coating layer 3 is applied to the aforesaid first mineral coating layer 2.

In a further example embodiment of the backing of the invention (not shown in the drawings), the backing 10" in figure 3 comprises a further mineral coating layer 2 applied to the second face F2 of the reinforcement layer 1. Such a further backing thus comprises the following stratigraphy (from the outside towards the inside of the panel): mineral coating 2, reinforcement layer 1, mineral coating 2, gas-impermeable coating 3. Here, the gas-tight coating 3 is in contact with the insulating foam of the main layer 50 of the panel.

The second gas-impermeable coating layer 3 is an applied compound comprising a water dispersed polymer resin, and optionally additives.

Such a second gas-impermeable coating layer 3 has a thickness between 0.1 mm and 1 mm.

Said dispersion is a water dispersion in which the dispersion phase is water.

In greater detail, such a polymer resin of the second coating layer 3 is a water-dispersed resin selected from the group consisting of:
- polyamides (PA)
- polyvinylidene chloride (PVDC)
- ethylene vinyl alcohol (EVOH)
- polyvinyl alcohol (PVOH)
- meta-xylene diamine - aromatic polyamide (MXD6)

According to one example embodiment, the aforesaid second coating layer 3 is an applied compound comprising:
- from 5% to 30%, percentage by weight, of ethylene vinyl alcohol resins (EVOH) or polyvinyl alcohol (PVOH);
- from 70% to 95%, percentage by weight, of water. Optionally, the compound comprises from 0.01% to 10%, percentage by weight, of additives.

In a preferred embodiment, the second coating layer 3 is obtained from a water dispersion of polymer EVOH or PVOH at 10 to 20% by weight. Such a polymer dispersion is applied directly to the backing, possibly adding additives or fillers to the dispersion.

In particular, the Applicant has verified that by executing the application, for example by spreading the aforesaid water dispersions of EVOH and of PVOH at 10 to 20% and then drying, for example at a high temperature, on a fibrous reinforcement layer, for example a glass fiber fabric, the coating layer 3 thus obtained has an OTR less than 4.5 ml/m2 over 24 hours, as set forth by Standard ASTM F2622-08/ASTM D3985.

In other words, the second coating layer 3 thus obtained is impermeable to the spreading of oxygen, that is it is a gas-impermeable (gas-tight) coating according to Standard ASTM F2622-08/ASTM D3985.

According to embodiments, the fibrous material of the reinforcement layer 1 may alternatively be formed by:
- a natural (weft-warp) fabric or a natural non-woven fabric,
- a synthetic (weft-warp) fabric or a synthetic non-woven fabric,
- a composite (weft-warp) fabric or composite non-woven fabric or with hybrid fibers,
- a mesh, for example consisting of or containing the aforesaid fibrous material.

In a preferred embodiment, the reinforcement layer 1 made of fibrous material is a non-woven fabric made of glass fiber.

With reference to the example embodiments in figures 2 and 3, the reinforcement layer 1 of backing 10', 10" is turned to and faces and is connected with the respective outer surface 51, 52 of the main layer 50 of panel 100.

With reference to the example embodiment in figure 1, the second coating layer 3 of backing 10 is turned to and faces and is connected with the respective outer surface 51, 52 of the main layer 50 of panel 100, and not the reinforcement layer 1.

The reinforcement layer 1 gives mechanical resistance and/or dimensional stability to the backing layer 10, 10', 10" and therefore to the insulating panel 100.

In one example embodiment, the first coating layer 2 is an applied compound comprising:
- a dispersed polymer resin,
- inert fillers,
optionally water and additives.

For example, the compound of the first coating layer 2 comprises:
- from 5% to 30%, percentage by weight, of water dispersed polymer resin (e.g. acrylic, acrylic-styrene, styrenic);
- from 40% to 80%, percentage by weight, of inert fillers;
- from 0.5% to 5%, percentage by weight, of additives;
- from 10% to 30%, percentage by weight, of water.

It is worth noting that to obtain a substantial uniformity of properties and thickness of the backing layer 10, 10', 10", the second gas-impermeable coating layer 3 may be applied to the reinforcement layer 1 or to the first mineral coating layer 2 so as to cover the whole surface thereof in a substantially uniform way.

Making the backing layer 10, 10', 10" and the insulating panel 100 by means of a gas-impermeable coating layer 3, in particular made by means of applying a water dispersion of polymers to the fibrous reinforcement layer 1 also allows the following needs to be obtained and combined with one another:
- flexibility and windability of the backing layer 10, 10', 10" prior to the application thereof to the insulating panel 100,
- mechanical resistance of the backing layer 10, 10', 10" and of the insulating panel 100,
- dimensional stability of the backing layer 10, 10', 10" and of the insulating panel 100,
- suitability for industrially manufacturing the insulating panel 100 made of an expanded/extruded synthetic material, in particular expanded polyurethane.

The application and fastening of the backing layer 10, 10', 10" to the main layer 50 of the insulating panel 100 occurs for example, by adhesion between the reinforcement layer 1 (or the second coating layer 3) of the backing layer 10, 10', 10" and the main layer 50, for example by means of the same synthetic material, e.g. polyurethane, of the main layer in expansion phase.

According to one embodiment, a method for manufacturing the backing layer 10, 10', 10" of the invention comprises the steps of:
- preparing the reinforcement layer 1 made of fibrous material;
- providing a gas-impermeable coating layer 3 by applying a water dispersion of at least one polymer to the reinforcement layer 1 or to a coating layer 2 of the mineral type provided on the reinforcement layer 1, and subsequent drying, preferably at a high temperature.

In particular, the high temperature drying step may be performed by positioning the backing layer 10, 10', 10" in, or causing it to pass through, a hot air furnace, for example at a temperature between 100°C and 250°C.

The method may also comprise a step of winding the backing layer 10, 10', 10" to form a roll suitable for transport and/or being used in an unwinding system of the backing layer during the manufacturing of the insulating panel 100.

According to one embodiment, manufacturing the backing layer 10, 10', 10" is continuously executed by means of a roll-to-roll type system and process in which the reinforcement layer 1 made of fibrous material (upstream) is continuously unwound (further downstream) simultaneously to the application of the coating layer 3 to the unwound reinforcing layer 1 or to the first coating layer 2, and with simultaneous drying (even further downstream) of the applied coating layer 3, and with the rewinding (even further downstream) of the backing layer 10, 10', 10" obtained after drying the second coating layer 3.

In a different example embodiment, one of the two coating layers 2, 3 may be applied to reinforcement 1 made of fibrous material in a first processing step, to then execute a step of drying and rewinding backing 10, 10', 10".

A second processing step may be completed at a second time, which provides unwinding the backing to apply the second coating layer, followed by a further drying and a final roll winding step of backing 10, 10', 10".

According to a preferred embodiment, a method for manufacturing the insulating panel 100 comprises the steps of:
- forming the main layer 50 made of an expanded synthetic material, e.g. polyurethane,
- applying the backing layer 10', 10" to one only or both the opposite first and second surfaces 51, 52 of the main layer 50, with the reinforcement layer 1 facing the main layer 50.

In a different embodiment, the second coating layer 3 of backing 10 faces the main layer 50.

The formation of the main layer 50 may comprise a step of spraying and/or extruding and/or spreading a polymeric foam, e.g. polyurethane, over a first backing 10, 10', 10" alone, and then applying a second backing layer 10, 10', 10" to the main polymer layer 50 formed upon the expansion of the polymer foam, so that such a main layer 50 of panel 100 is interposed between the two backings.

Alternatively, the formation of the main layer 50 may comprise a step of spraying and/or extruding and/or spreading the polymeric foam, e.g. polyurethane, in a gap between two of the aforesaid previously made backing layers 10, 10', 10" so that the backing layers 10, 10', 10" form a delimitation for the expansion of the polymer foam which forms the main insulating layer 50.

According to a further embodiment, the step of applying the backing layer may comprise gluing the backing layer 10, 10', 10" to one alone or both the opposite first and second surfaces 51, 52 of the already formed main layer 50 (for example, already completely expanded and shaped).

The backing layer 10, 10', 10" for insulating panels 100 has several advantages.

Indeed, the new flexible backing 10, 10', 10" for insulating panels (mainly made of rigid expanded polyurethane) combines the features of the traditional mineralized backings with gas-barrier properties without the need to laminate gas-tight metal or plastic films.

Moreover, the presence in backing 10, 10', 10" of two coating layers 2 and 3 rather than layers glued or laminated to one another ensures the formation of a single body, avoiding effects of delamination or accidental detachment.

Moreover, backing 10, 10', 10" does not have bubbles or wrinkles which may affect the gas-tight properties of the backing in addition to damaging the structure of the panel.

Moreover, the presence of a fibrous reinforcement layer, in particular made of glass fiber, ensures a higher dimensional stability with respect to multilayer backings.

Moreover, the Applicant has verified that the performance in terms of oxygen permeability (see the OTR parameter) of the second coating layer 3 is comparable with the one which can be obtained using metal layers, or in any case in line with Standard ASTM D 3985.

When manufacturing insulating panels 100, if the polyurethane foam is applied to the side of backing 10, 10" formed by the second coating layer 3 having gas-barrier properties (figure 1 and figure 3), such a layer 3 allows the cells to be sealed and the insulating properties of panel 100 to be optimized.

With reference to the backings 10, 10' in figures 1 and 2, the outer side of panel 100 appears as a simple mineralized backing which ensures protection, water repellence, easy handling of the finished panel. Such a first mineral coating layer 2 of the backing also ensures a good resistance to treading and abrasion, in particular during the operations of installing the panel because it avoids perforations or scratches which metal films suffer from.

Moreover, due to the features of the mineral-based coating 2, the outer face of panel 100 constitutes a sublayer which is compatible with the application of adhesive membranes for the application on roofs of glues, plasters, resins, mortars, and for the application of wall panels.

Each of the individual features described by way of example combined with other features is to be intended as also described in independent and isolated manner and therefore, also applicable to other described embodiments of the backing layer 10, 10', 10" of the insulating panel 100 and of the manufacturing method.

## Claims

1. A backing layer (10; 10'; 10") for an insulating construction panel (100) of the type comprising:
- a main thermally insulating layer (50) consisting of an expanded insulation having a cellular structure comprising a first surface (51) and an opposite second surface (52);
- at least one backing layer (10; 10'; 10") intended to face and be connected to the main layer (50) of the insulating panel along at least one of said first and second surfaces (51, 52),
wherein said backing layer (10; 10'; 10") comprises:
- a reinforcement layer (1) made of fibrous material,
- a first coating layer (2) for said reinforcement layer of the mineral type,
- a second coating layer (3) for the reinforcement layer having gas-impermeability properties,
**characterized in that**
said second gas-impermeable coating layer (3) is made by applying at least one polymer to the reinforcement layer (1) or to the first coating layer (2) of the mineral type, and after drying,
said second coating layer (3) is an applied compound comprising a water dispersed polymer resin, and optionally additives.

2. Backing layer (10; 10'; 10") according to claim 1, wherein the water-dispersed polymer resin of the second coating layer (3) is selected from the group consisting of:
- polyamides (PA)
- polyvinylidene chloride (PVDC)
- ethylene vinyl alcohol (EVOH)
- polyvynil alcohol (PVOH)
- meta-xylene diamine - aromatic polyamide (MXD6)

3. Backing layer (10; 10'; 10") according to claim 1 or 2, wherein said second coating layer (3) is an applied compound comprising:
- from 5% to 30%, percentage by weight, of Ethylene vinyl alcohol resins (EVOH) or Polyvinyl alcohol (PVOH);
- from 70% to 95%, percentage by weight, of water.

4. Backing layer (10; 10'; 10") according to claim 1, wherein the fibrous material of the reinforcement layer (1) is selected from the group consisting of:
- natural (weft-warp) fabric or natural non-woven fabric,
- synthetic (weft-warp) fabric or synthetic non-woven fabric,
- composite (weft-warp) fabric or composite non-woven fabric or with hybrid fibers,
- mesh.

5. Backing layer (10; 10'; 10") according to claim 1 or 4, wherein said reinforcement layer (3) made of fibrous material is a non-woven fabric made of glass fiber.

6. Backing layer (10; 10'; 10") according to claim 1, wherein said first coating layer (2) is an applied compound comprising:
- a dispersed polymer resin,
- inert fillers,
optionally water and additives.

7. Backing layer (10) according to claim 1, wherein said fibrous reinforcement layer (1) comprises a first face (F1) and an opposite second face (F2), said first mineral coating layer (2) being applied to the first face (F1) of the fibrous reinforcement layer (1) and the second gas-impermeable coating layer (3) being applied to the second face (F2) of the fibrous reinforcement layer.

8. Backing layer (10') according to claim 1, wherein said fibrous reinforcement layer (1) comprises a first face (F1) and an opposite second face (F2), the second gas-impermeable coating layer (3) being applied to the first face (F1) of the fibrous reinforcement layer (1) and the first mineral coating layer (2) being applied to the aforesaid second gas-impermeable coating layer (3).

9. Backing layer (10") according to claim 1, wherein said fibrous reinforcement layer (1) comprises a first face (F1) and an opposite second face (F2), the first mineral coating layer (2) being applied to the first face (F1) of the fibrous reinforcement layer (1) and the second gas-impermeable coating layer (3) being applied to the aforesaid first mineral coating layer (2).

10. Backing layer (10") according to claim 9, further comprising a further mineral coating layer (2) applied to the second face (F2) of the fibrous reinforcement layer (1) .

11. An insulating construction panel (100), comprising:
- a main thermally insulating layer (50) consisting of an expanded insulation having a cellular structure comprising a first surface (51) and an opposite second surface (52),
- a backing layer (10; 10") according to any one of the claims 1-7 and 9-10, connected to the main layer (50) along at least one of said first and second surfaces (51, 52) with the second gas-impermeable coating layer (3) facing the main layer (50).

12. An insulating construction panel (100), comprising:
- a main thermally insulating layer (50) consisting of an expanded insulation having a cellular structure comprising a first surface (51) and an opposite second surface (52),
- a backing layer (10; 10") according to any one of the claims 1-6 and 8, 9, connected to the main layer (50) along at least one of said first and second surfaces (51, 52) with the reinforcement layer (1) made of fibrous material facing the main layer (50).

13. A method for manufacturing a backing layer (10; 10'; 10") for an insulating construction panel (100) of the type comprising:
- a main thermally insulating layer (50) consisting of an expanded insulation having a cellular structure comprising a first surface (51) and an opposite second surface (52),
- at least one backing layer (10; 10'; 10") intended to face and be connected to the main layer (50) of the insulating panel along at least one of said first and second surfaces (51, 52),
wherein said method comprises the steps of:
- arranging a reinforcement layer (1) made of fibrous material;
- providing a coating layer (2) of the mineral type on said reinforcement layer (1);
- providing a gas-impermeable coating layer (3) by applying a compound comprising a water-dispersed polymer resin, and optionally additives to the reinforcement layer (1) or to the coating layer (2) of the mineral type, and then drying.

14. A manufacturing method according to claim 13, wherein the step of drying is carried out by positioning the backing layer (10; 10'; 10") in a hot-air furnace, at a temperature from 100°C to 250°C.

15. Backing layer (10; 10'; 10") according to claim 1 or 2, wherein said second coating layer (3) is an applied compound comprising from 10% to 20%, percentage by weight, of water-dispersed Ethylene vinyl alcohol (EVOH) or Polyvinyl alcohol (PVOH) resins.

## Patentansprüche

1. Trägerschicht (10; 10'; 10") für eine isolierende Bauplatte (100) des Typs, der Folgendes umfasst:
- eine wärmeisolierende Hauptschicht (50), die aus einer expandierten Isolierung mit einer zellularen Struktur besteht, die eine erste Oberfläche (51) und eine gegenüberliegende zweite Oberfläche (52) aufweist;
- mindestens eine Trägerschicht (10; 10'; 10"), die dazu bestimmt ist, der Hauptschicht (50) der Isolierplatte zugewandt und mit ihr entlang mindestens einer der ersten und zweiten Oberflächen (51, 52) verbunden zu sein,
wobei die Trägerschicht (10; 10'; 10") umfasst:
- eine Verstärkungsschicht (1) aus Fasermaterial,
- eine erste Deckschicht (2) für die Verstärkungsschicht vom mineralischen Typ,
- eine zweite Deckschicht (3) für die Verstärkungsschicht mit gasundurchlässigen Eigenschaften,
**dadurch gekennzeichnet, dass**
die zweite gasundurchlässige Deckschicht (3) durch Aufbringen mindestens eines Polymers auf die Verstärkungsschicht (1) oder auf die erste Deckschicht (2) des mineralischen Typs und nach Trocknen hergestellt wird,
die zweite Deckschicht (3) eine aufgebrachte Verbindung ist, die ein wasserdispergiertes Polymerharz und gegebenenfalls Additive umfasst.

2. Trägerschicht (10; 10'; 10") nach Anspruch 1, wobei das wasserdispergierte Polymerharz der zweiten Deckschicht (3) ausgewählt ist aus der Gruppe bestehend aus:
- Polyamiden (PA)
- Polyvinylidenchlorid (PVDC)
- Ethylen-Vinylalkohol (EVOH)
- Polyvinylalkohol (PVOH)
- meta-Xylendiamin - aromatischem Polyamid (MXD6).

3. Trägerschicht (10; 10'; 10") nach Anspruch 1 oder 2, wobei die zweite Deckschicht (3) eine aufgebrachte Verbindung ist, die Folgendes umfasst
- 5 bis 30 Gew.-% Ethylen-Vinylalkohol-Harze (EVOH) oder Polyvinylalkohol (PVOH);
- 70 % bis 95 Gew.-% Wasser.

4. Trägerschicht (10; 10'; 10") nach Anspruch 1, wobei das Fasermaterial der Verstärkungsschicht (1) ausgewählt ist aus der Gruppe bestehend aus:
- natürlichem (Schuss-Kette) Stoff oder natürlichem Vliesstoff,
- synthetischem (Schuss-Kette) Stoff oder synthetischem Vliesstoff,
- Verbundstoff (Schuss-Kette) oder Verbundvliesstoff oder mit Hybridfasern,
- Gewebe.

5. Trägerschicht (10; 10'; 10") nach Anspruch 1 oder 4, wobei die Verstärkungsschicht (3) aus Fasermaterial ein Vliesstoff aus Glasfaser ist.

6. Trägerschicht (10; 10'; 10") nach Anspruch 1, wobei die erste Deckschicht (2) eine aufgebrachte Verbindung ist, die umfasst:
- ein dispergiertes Polymerharz,
- inerte Füllstoffe,
gegebenenfalls Wasser und Additive.

7. Trägerschicht (10) nach Anspruch 1, wobei die faserige Verstärkungsschicht (1) eine erste Seite (F1) und eine gegenüberliegende zweite Seite (F2) aufweist, wobei die erste mineralische Deckschicht (2) auf die erste Seite (F1) der faserigen Verstärkungsschicht (1) und die zweite gasundurchlässige Deckschicht (3) auf die zweite Seite (F2) der faserigen Verstärkungsschicht aufgebracht ist.

8. Trägerschicht (10') nach Anspruch 1, wobei die faserige Verstärkungsschicht (1) eine erste Seite (F1) und eine gegenüberliegende zweite Seite (F2) aufweist, wobei die zweite gasundurchlässige Deckschicht (3) auf die erste Seite (F1) der faserigen Verstärkungsschicht (1) und die erste mineralische Deckschicht (2) auf die vorgenannte zweite gasundurchlässige Deckschicht (3) aufgebracht ist.

9. Trägerschicht (10") nach Anspruch 1, wobei die faserige Verstärkungsschicht (1) eine erste Seite (F1) und eine gegenüberliegende zweite Seite (F2) aufweist, wobei die erste mineralische Deckschicht auf die erste Seite (F1) der faserigen Verstärkungsschicht (1) und die zweite gasundurchlässige Deckschicht (3) auf die vorgenannte erste mineralische Deckschicht (2) aufgebracht ist.

10. Trägerschicht (10") nach Anspruch 9, ferner umfassend eine weitere mineralische Deckschicht (2), die auf der zweiten Seite (F2) der faserigen Verstärkungsschicht (1) aufgebracht ist.

11. Isolierende Bauplatte (100), umfassend:
- eine wärmeisolierende Hauptschicht (50), die aus einer expandierten Isolierung mit einer zellularen Struktur besteht, die eine erste Oberfläche (51) und eine gegenüberliegende zweite Oberfläche (52) aufweist,
- eine Trägerschicht (10; 10") nach einem der Ansprüche 1-7 und 9-10, die mit der Hauptschicht (50) entlang mindestens einer der ersten und zweiten Oberflächen (51, 52) verbunden ist, wobei die zweite gasundurchlässige Deckschicht (3) der Hauptschicht (50) zugewandt ist.

12. Isolierende Bauplatte (100), umfassend
- eine wärmeisolierende Hauptschicht (50), die aus einer expandierten Isolierung mit einer zellularen Struktur besteht, die eine erste Oberfläche (51) und eine gegenüberliegende zweite Oberfläche (52) aufweist,
- eine Trägerschicht (10; 10") nach einem der Ansprüche 1-6 und 8, 9, die mit der Hauptschicht (50) entlang mindestens einer der ersten und zweiten Oberflächen (51, 52) verbunden ist, wobei die Verstärkungsschicht (1) aus Fasermaterial der Hauptschicht (50) zugewandt ist.

13. Verfahren zur Herstellung einer Trägerschicht (10; 10'; 10") für eine isolierende Bauplatte (100) des Typs, der Folgendes umfasst:
- eine wärmeisolierende Hauptschicht (50), die aus einer expandierten Isolierung mit einer zellularen Struktur besteht, die eine erste Oberfläche (51) und eine gegenüberliegende zweite Oberfläche (52) aufweist,
- mindestens eine Trägerschicht (10; 10'; 10"), die dazu bestimmt ist, der Hauptschicht (50) der Isolierplatte zugewandt und mit ihr entlang mindestens einer der ersten und zweiten Oberflächen (51, 52) verbunden zu sein,
wobei das Verfahren die Schritte umfasst:
- Anordnen einer Verstärkungsschicht (1) aus faserigem Material;
- Bereitstellen einer Deckschicht (2) vom mineralischen Typ auf der Verstärkungsschicht (1);
- Bereitstellen einer gasundurchlässigen Deckschicht (3) durch Aufbringen einer Verbindung, die ein in Wasser dispergiertes Polymerharz und gegebenenfalls Additive umfasst, auf die Verstärkungsschicht (1) oder die Deckschicht (2) des mineralischen Typs, und anschließendes Trocknen.

14. Herstellungsverfahren nach Anspruch 13, wobei der Schritt des Trocknens durchgeführt wird, indem die Trägerschicht (10; 10'; 10") in einem Heißluftofen positioniert wird, bei einer Temperatur von 100°C bis 250°C.

15. Trägerschicht (10; 10'; 10") nach Anspruch 1 oder 2, wobei die zweite Deckschicht (3) eine aufgebrachte Verbindung ist, die 10 bis 20 Gew.-% wasserdispergierte Ethylen-Vinylalkohol (EVOH)- oder Polyvinylalkohol (PVOH)-Harze umfasst.

## Revendications

1. Couche de support (10 ; 10' ; 10") pour un panneau de construction isolant (100) du type comprenant :
- une couche d'isolation thermique principale (50) se composant d'un isolant expansé comportant une structure cellulaire comprenant une première surface (51) et une seconde surface opposée (52) ;
- au moins une couche de support (10 ; 10' ; 10") destinée à faire face et à être reliée à la couche principale (50) du panneau isolant le long d'au moins l'une desdites première et seconde surfaces (51, 52),
dans laquelle ladite couche de support (10 ; 10' ; 10") comprend :
- une couche de renfort (1) constituée d'une matière fibreuse,
- une première couche de revêtement (2) pour ladite couche de renfort du type minéral,
- une seconde couche de revêtement (3) pour la couche de renfort présentant des propriétés d'imperméabilité au gaz,
**caractérisée en ce que**
ladite seconde couche de revêtement imperméable au gaz (3) est constituée par l'application d'au moins un polymère à la couche de renfort (1) ou à la première couche de revêtement (2) du type minéral, et après séchage,
ladite seconde couche de revêtement (3) est un composé appliqué comprenant une résine polymère dispersée dans l'eau, et facultativement des additifs.

2. Couche de support (10 ; 10' ; 10") selon la revendication 1, dans laquelle la résine polymère dispersée dans l'eau de la seconde couche de revêtement (3) est sélectionnée dans le groupe se composant de :
- polyamides (PA)
- polychlorure de vinylidène (PVDC)
- éthylène alcool de vinyle (EVOH)
- alcool polyvinylique (PVOH)
- polyamide aromatique à diamine de métaxylène (MXD6).

3. Couche de support (10 ; 10' ; 10") selon la revendication 1 ou 2, dans laquelle ladite seconde couche de revêtement (3) est un composé appliqué comprenant :
- de 5 % à 30 % en poids de résines d'éthylène alcool de vinyle (EVOH) ou d'alcool polyvinylique (PVOH) ;
- de 70 % à 95 % en poids d'eau.

4. Couche de support (10 ; 10' ; 10") selon la revendication 1, dans laquelle la matière fibreuse de la couche de renfort (1) est sélectionnée dans le groupe se composant de :
- tissu naturel (chaîne-trame) ou tissu non-tissé naturel,
- tissu synthétique (chaîne-trame) ou tissu non-tissé synthétique,
- tissu composite (chaîne-trame) ou tissu non-tissé composite ou avec fibres hybrides,
- maillage.

5. Couche de support (10 ; 10' ; 10") selon la revendication 1 ou 4, dans laquelle ladite couche de renfort (3) constituée de matière fibreuse est un tissu non-tissé constitué de fibre de verre.

6. Couche de support (10 ; 10' ; 10") selon la revendication 1, dans laquelle ladite première couche de revêtement (2) est un composé appliqué comprenant :
- une résine polymère dispersée,
- des charges inertes,
facultativement de l'eau et des additifs.

7. Couche de support (10) selon la revendication 1, dans laquelle ladite couche de renfort fibreuse (1) comprend une première face (F1) et une seconde face opposée (F2), ladite première couche de revêtement minérale (2) étant appliquée à la première face (F1) de la couche de renfort fibreuse (1) et la seconde couche de revêtement imperméable au gaz (3) étant appliquée à la seconde face (F2) de la couche de renfort fibreuse.

8. Couche de support (10') selon la revendication 1, dans laquelle ladite couche de renfort fibreuse (1) comprend une première face (F1) et une seconde face opposée (F2), ladite seconde couche de revêtement imperméable au gaz (3) étant appliquée à la première face (F1) de la couche de renfort fibreuse (1) et la première couche de revêtement minérale (2) étant appliquée à la seconde couche de revêtement imperméable au gaz (3).

9. Couche de support (10") selon la revendication 1, dans laquelle ladite couche de renfort fibreuse (1) comprend une première face (F1) et une seconde face opposée (F2), la première couche de revêtement minérale (2) étant appliquée à la première face (F1) de la couche de renfort fibreuse (1) et la seconde couche de revêtement imperméable au gaz (3) étant appliquée à la première couche de revêtement minéral (2).

10. Couche de support (10") selon la revendication 9, comprenant en outre une autre couche de revêtement minérale (2) appliquée à la seconde face (F2) de la couche de renfort fibreuse (1).

11. Panneau de construction isolant (100), comprenant :
- une couche d'isolation thermique principale (50) se composant d'un isolant expansé comportant une structure cellulaire comprenant une première surface (51) et une seconde surface opposée (52) ;
- une couche de support (10 ; 10") selon l'une quelconque des revendications 1 à 7 et 9, 10, reliée à la couche principale (50) le long d'au moins l'une desdites première et seconde surfaces (51, 52) avec la seconde couche de revêtement imperméable au gaz (3) faisant face à la couche principale (50).

12. Panneau de construction isolant (100), comprenant :
- une couche d'isolation thermique principale (50) se composant d'un isolant expansé comportant une structure cellulaire comprenant une première surface (51) et une seconde surface opposée (52) ;
- une couche de support (10 ; 10") selon l'une quelconque des revendications 1 à 6 et 8, 9, reliée à la couche principale (50) le long d'au moins l'une desdites première et seconde surfaces (51, 52) avec la couche de renfort (1) constituée de matière fibreuse faisant face à la couche principale (50).

13. Procédé de fabrication d'une couche de support (10 ; 10' ; 10") pour un panneau de construction isolant (100) du type comprenant :
- une couche d'isolation thermique principale (50) se composant d'un isolant expansé comportant une structure cellulaire comprenant une première surface (51) et une seconde surface opposée (52),
- au moins une couche de support (10 ; 10' ; 10") destinée à faire face et à être reliée à la couche principale (50) du panneau isolant le long d'au moins l'une desdites première et seconde surfaces (51, 52),
dans lequel le procédé comprend les étapes suivantes :
- l'agencement d'une couche de renfort (1) constituée d'une matière fibreuse ;
- la fourniture d'une couche de revêtement (2) du type minéral sur ladite couche de renfort (1) ;
- la fourniture d'une couche de revêtement imperméable au gaz (3) par l'application d'un composé comprenant une résine polymère dispersée dans l'eau, et facultativement d'additifs à la couche de renfort (1) ou à la couche de revêtement (2) du type minéral, puis le séchage.

14. Procédé de fabrication selon la revendication 13, dans lequel l'étape du séchage est réalisée par le positionnement de la couche de support (10 ; 10' ; 10") dans un four à air chaud, à une température de 100°C à 250°C.

15. Couche de support (10 ; 10' ; 10") selon la revendication 1 ou 2, dans laquelle ladite seconde couche de revêtement (3) est un composé appliqué comprenant de 10 % à 20 % en poids de résines d'éthylène alcool de vinyle (EVOH) ou d'alcool polyvinylique (PVOH) dispersées dans l'eau.
